(19) Europäisches Patentamt
European Patent Office
Office européen des brevets

(11) EP 4 410 907 A1

(12) EUROPEAN PATENT APPLICATION

(43) Date of publication:
**07.08.2024 Bulletin 2024/32**

(21) Application number: **23154089.9**

(22) Date of filing: **31.01.2023**

(51) International Patent Classification (IPC):
***C09D 11/101*** (2014.01) ***C09D 11/38*** (2014.01)
***C09D 11/322*** (2014.01) ***C14C 11/00*** (2006.01)

(52) Cooperative Patent Classification (CPC):
**C09D 11/38; C08F 290/067; C08L 75/16; C09D 11/101; C09D 11/322; C14C 11/006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **AGFA NV**
**2640 Mortsel (BE)**

(72) Inventor: **LECHERICEY, Marie**
**2640 Mortsel (BE)**

(74) Representative: **Strijckers, Hans Louis P.**
**AGFA NV**
**Intellectual Property Department**
**Septestraat 27**
**2640 Mortsel (BE)**

# (54) DECORATED NATURAL LEATHER

(57) A decorated natural leather having a decorative image inkjet printed with radiation curable inkjet inks on a crusted leather having a pigmented basecoat on the grain side of the crusted leather, wherein the decorative image is covered by a topcoat and wherein a barrier layer containing a thiol polymer having a molecular weight of at least 500 g/mol is present on the basecoat and/or in the topcoat. A method for manufacturing the decorated natural leather is also disclosed.

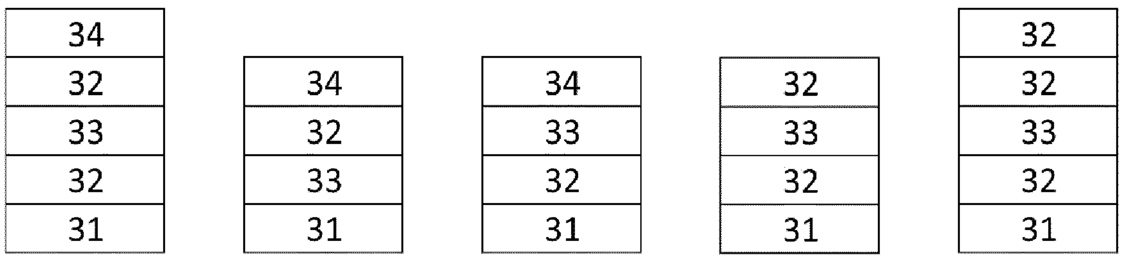


Fig.3A Fig.3B Fig.3C Fig.3D Fig.3E

Fig.3

EP 4 410 907 A1

Processed by Luminess, 75001 PARIS (FR)

## Description

### Technical Field

The present invention relates to decorated natural leather and methods for its manufacturing using inkjet technology.

### Background Art

Natural leather has been traditionally decorated by screen printing. However, screen printing is labour intensive as each colour requires an individual screen. This is costly and time consuming, especially when personalization is desired. Digital printing technologies using UV curable inkjet ink have been disclosed for printing on natural leather, as illustrated by WO 2013/135828 A (CODUS). UV curable inkjet inks have the advantage that they can also be printed on substantially non-absorbing substrates, such as natural leather that after tanning and crusting has been coated with a pigmented layer.

In leather articles like shoes and wallets, the decorated natural leather must be able to endure a lot of flexing without deterioration of the decoration. For accomplishing this, flexible UV curable inkjet inks are used that contain a high amount of monofunctional monomers. For example, in EP 3833720 A (AGFA), the UV curable inkjet inks contain at least 85.0 wt% of monofunctional polymerizable compounds based on the total weight of the polymerizable composition. Consequently, considerable amounts of residual uncured monofunctional monomer may be present in the decorated natural leather, thus posing a health and safety risk.

A first approach to overcome this potential drawback would be to change from UV curable inkjet inks to aqueous inkjet inks. However, it has been observed that poor image quality is obtained especially when printing the aqueous inkjet inks on substantially non-absorbing substrates like crusted leather coated with a pigmented layer.

A second approach is to modify the polymerizable composition of the UV curable inkjet ink so that less residual uncured monomers remain in the printed image. In totally different applications like food packaging, this has been achieved by including substantially more polyfunctional monomers, as illustrated by EP 2053101 A (AGFA). However, this would reduce the flexibility of the printed leather substantially and lead to cracks in the printed image.

Another approach is to apply a barrier layer to a printed article. EP 2326674 A (SEKISUI) discloses a barrier layer comprising a polyvinyl amine-polyvinyl alcohol copolymer applied to a substrate as a watersoluble composition. Selvol® Ultiloc 5003 is a commercialized polyvinyl amine-polyvinyl alcohol copolymer according to this patent. Although amines can perform a Michael addition reaction with polymerizable compounds like acrylates, it has been observed that this technical solution does not lead to good migration results in the leather application.

Hence, there remains a need for decorated natural leather printed with UV curable inkjet inks that exhibits good flexibility and low amounts of migratable monomer and photodecomposition products of photoinitiators, such as mesitaldehyde.

### Summary of invention

In order to overcome the problems described above, preferred embodiments of the present invention have been realised with a decorated natural leather having a decorative image inkjet printed with radiation curable inkjet inks on a crusted leather having a pigmented basecoat on the grain side of the crusted leather, wherein the decorative image is covered by a topcoat and wherein a barrier layer containing a thiol polymer having a molecular weight of at least 500 g/mol is present on the basecoat and/or in the topcoat.

It was surprisingly found that the use of a barrier layer containing a thiol polymer having a molecular weight of at least 500 g/mol could reduce the extractables from the decorated natural leather and this not only for polymerizable compounds like acrylate monomers and vinyl methyl oxazolidinone, but also for non-reactive compounds like phenoxyethanol and photodecomposition compounds like mesitaldehyde.

An object of the invention is also to provide methods of manufacturing decorated natural leather that has less extractable compounds

Another object of the invention is an aqueous composition containing 2 to 50 wt% of a thiol polymer having a molecular weight of at least 500 g/mol for reducing the extractability of components from a decorated natural leather printed with radiation curable ink.

These and other objects of the present invention will become apparent from the detailed description hereinafter.

### Brief description of drawings

**Figure 1** shows a flow chart of the traditional manufacturing of leather articles that can generally be split up in five phases. The preparatory phase 1 often occurs partly in a slaughterhouse and partly in a tannery, while phases 2 to 4 occur in the tannery and phase 5 occurs at a leather article manufacturer. In a first phase, the preparatory phase, the skin is removed from the animal (flaying) and pre-treated for the second phase of tanning. The pre-treatment may involve processes such as soaking, liming, unhairing, splitting and pickling (adjusting pH for assisting penetration of tanning agents). In the tanning phase, the protein of the rawhide or skin is converted into a stable material that will not putrefy. Chrome is most frequently used as tanning agent whereby the tanned leather obtains a pale blue colour, commonly called "wet blue". In the third phase of crusting, the tanned leather is dried and softened. The crusting often includes processes such as stripping (removal of superficially fixed tannins), fat liquoring (fats, oils and waxes are fixed to the leather fibres), dyeing, whitening, physical softening, and buffing (abrasion of leather surface to reduce grain defects). In the fourth phase, called the finishing phase, the leather is made ready for sale to leather article manufacturers. Finishing operations may include lacquer coating, polishing and embossing. In the fifth phase, a leather article is manufactured, involving processes, which may include cutting, perforating, sewing, leather wrapping, decoration and embossing.

**Figure 2** shows schematically a cross-section of an animal skin including a grain (21) and a corium (23) separated by a junction of grain and corium (22). The different leathers made from the animal skin include full grain leather (24), top grain leather (25) and split leather (26).

**Figure 3** exemplifies layer build-ups suitable for the invention without however being limited thereto.

**Figure 3A** shows a decorated natural leather containing a crusted leather having a pigmented basecoat (31) with an ink layer (33) sandwiched between two barrier layers (32) and an outermost topcoat layer (34).

**Figure 3B** shows a decorated natural leather containing a crusted leather having a pigmented basecoat (31) with an ink layer (33) covered by a barrier layer (32) and an outermost topcoat layer (34).

**Figure 3C** shows a decorated natural leather containing a crusted leather having a pigmented basecoat (31) covered by a barrier layer (32), an ink layer (33) and an outermost topcoat layer (34).

**Figure 3D** shows a decorated natural leather containing a crusted leather having a pigmented basecoat (31) covered by a barrier layer (32), an ink layer (33) and a second barrier layer (32) functioning as topcoat.

**Figure 3E** shows a decorated natural leather containing a crusted leather having a pigmented basecoat (31) with an ink layer (33) sandwiched between three barrier layers (32).

Description of embodiments

Definitions

The term "crusted leather" or "crust leather" means leather that has been tanned and crusted, but not finished.

The term "monofunctional" as used in monofunctional polymerizable compounds means compounds containing a single polymerizable group.

The term "polyfunctional" as used in polyfunctional polymerizable compounds means compounds containing two, three or more polymerizable groups.

Thiol Polymers

The thiol polymer has a molecular weight of at least 500 g/mol, preferably at least 1000 g/mol, and more preferably at least 1500 g/mol. Such molecular weights make the thiol polymer non-extractable.

The thiol polymer preferably has a thiol content of at least 80 or 100 g/mol, more preferably at least 300 g/mol, and most preferably at least 500 g/mol. The extractability of compounds tends to decrease as the thiol content increases.

Preferred thiol polymer are selected from the group consisting of an ethoxylated trimethylolpropane tri(3-mercaptopropionate), a polycaprolactone tetra(3-mercaptopropionate), an alkoxysilane involving (3-isocyanatopropyl)trimethoxy-reaction products with pentaerythritol tetrakis(3-mercaptopropionate) and an alkoxysilane having a siloxane chain substituted by mercapto groups.

Ethoxylated trimethylolpropane tri(3-mercaptopropionate) are commercially available as Thiocure® ETTMP1300 and Thiocure® ETTMP700 from Bruno Bock Chemische Fabrik GmbH & Co. KG.

A suitable polycaprolactone tetra(3-mercaptopropionate) is available as Thiocure® PCL4MP 1350 from Bruno Bock Chemische Fabrik GmbH & Co. KG.

Other suitable alkoxysilanes containing thiol groups include X-12-1154 and KR-518 from Shin-Etsu Chemical Co. Ltd.

A barrier layer may contain a single thiol polymer or a mixture thereof.

For applying a barrier layer, use is preferably made of an aqueous composition containing 2 to 25 wt% of a thiol polymer having a molecular weight of at least 500 g/mol. Such a composition is effective in reducing the extractability

of components from a decorated natural leather printed with radiation curable ink, especially components selected from the group consisting of phenoxyethanol, mesitaldehyde, acrylate monomers and vinyl methyl oxazolidinone.

## Decorated Natural Leather

A decorated natural leather preferably has a decorative image inkjet printed with radiation curable inkjet inks on a crusted leather having a pigmented basecoat on the grain side of the crusted leather, wherein the decorative image is covered by a topcoat and wherein a barrier layer containing a thiol polymer having a molecular weight of at least 500 g/mol is present on the basecoat and/or in the topcoat.

A barrier layer on the basecoat is for instance an effective measure for reducing extractables in shoes caused by sweaty feet or rainy weather.

A barrier layer present in the topcoat can be, for example, advantageously used in a leather handbag for reducing skin sensitization by acrylates and other compounds upon frequently touching the outside of the handbag.

In a preferred embodiment of the decorated natural leather, the barrier layer containing the thiol polymer is present both on the basecoat and in the topcoat. This is exemplified by Fig.3A, Fig.3D and Fig.3E. By " sandwiching" the decorative image inkjet printed with radiation curable inkjet inks between two or more barrier layers, the extraction of compounds from the decorative image is reduced in both the direction of the topcoat and the basecoat.

Natural leather comes in different grades (see Figure 2), such as full grain (24), top grain (25) which is essentially full-grain but with part of the grain layer sanded and the underlying split layer removed, and split leather (26). For the latter, the underlying layer of the cowhide is removed and used to create split leather. Depending on the thickness of the underlying layer, many splits can be created. Split leather has a rough appearance and is usually used to make suede. In the present invention preferably natural leather having a grain is used.

For preventing grain damage and weakness, the hide or skin is tanned preferably by chrome, but other tanning methods such as vegetable tanning may also be used. After tanning, the leather is dried and softened into so-called crusted leather. The crusting may include processes such as stripping (removal of superficially fixed tannins), fat liquoring (fats, oils and waxes are fixed to the leather fibres), dyeing, whitening, physical softening, and buffing (abrasion of leather surface to reduce grain defects). In the present invention, use is made of a crusted leather whereon a pigmented basecoat has been applied.

The decorated natural leather may be used for manufacturing a wide range of leather articles. Preferred leather articles include footwear, furniture, upholstery, bags and luggage, gloves, belts, wallets, clothing, automotive leather (e.g. train, plane, boat and car seats), interiors, books, stationary, interior decoration, packaging, equestrian articles, and the like.

## Manufacturing Methods for Decorating Natural Leather

A method of manufacturing decorated natural leather according to a preferred embodiment of the present invention comprises the steps of applying, in order, on a pigmented basecoat present on the grain side of a crusted leather: a) optionally a barrier layer containing a thiol polymer having a molecular weight of at least 500 g/mol; b) an ink layer by inkjet printing radiation curable inkjet inks; and c)a topcoat including a topcoat layer and/or optionally a barrier layer containing a thiol polymer having a molecular weight of at least 500 g/mol; with the proviso that at least one of the barrier layers in step a) and c) is applied.

In a preferred embodiment of the method of manufacturing decorated natural leather, one or more topcoat layers are present in the topcoat

In a preferred embodiment of the method of manufacturing decorated natural leather, the barrier layer containing the thiol polymer is present on the basecoat and in the topcoat. This allows for reducing the extractables in both the direction of the basecoat and the topcoat.

## Inkjet Printing

The inkjet printing method used in a preferred embodiment of the present invention includes the steps of a) jetting a pigmented free-radical curable inkjet ink; and b) curing the jetted pigmented free-radical curable inkjet ink by UV LED sources having a spectral emission in the range of 360 - 420 nm.

UV LED sources having a spectral emission in the range of 360 - 420 nm tend to cure the interior of ink layer much better than UV sources having a spectral emission smaller than 360 nm. Using UV LED sources is advantageous for reducing the extractables of cured ink layer.

Basecoats

The basecoat is applied on a crust leather for providing a level of image quality commensurate to the luxury aspect of leather as otherwise the low viscosity of inkjet inks lets them penetrate rapidly into the leather resulting in a reduced image quality.

The basecoat preferably has a colour similar to that of the corium and the grain. Any desired colour may be chosen for the corium or grain and the basecoat, such as red, green, brown, black, blue... The corium and grain are usually dyed by dyes during the crusting phase (see Phase 3 in Fig.1), while usually colour pigments are included in the basecoat. These colour pigment reduce the fading of the leather colour under prolonged UV exposure, such as from the sun.

The basecoat may be applied as a single layer, or may be applied as multiple layers. The multiple layers may even have a different composition for improving properties like adhesion or flexibility.

The basecoat preferably includes a polymer or copolymer based on polyurethane, as this has been found to improve flexibility to the printed leather.

Suitable polyurethanes include Urepal™ PU147 and PU181 from CHEMIPAL S.p.A.; Melio™ Promul 61 from STAHL; Astacin™ Finish PS from BASF; Ecrothan™ 4075, 4078 and 4084 from MICHELMAN; Incorez™ CS8073 and CS065-195 from INCOREZ. The dry weight of the polyurethane in the basecoat or topcoat is preferably in the range of 1 to 6 g/m$^2$.

The basecoat may include other types of polymers, such as polyamides or polyacrylates.

Suitable polyamides include the PA emulsion types ED310 and 161148 CX from MICHELMAN. The dry weight of the polyamide in the basecoat is preferably less than 7 g/m$^2$, more preferably less than 5 g/m$^2$.

Although polyurethanes are preferred as the polymers for the basecoat, other polymers may be used preferably in combination with the polyurethanes. Such polymers preferably have an elongation at break of more than 200%, more preferably 300%. The elongation at break is measured according to ISO527-2, for example, with a MTS Exceed™ testing apparatus from MTS Systems Corporation.

Another type of preferred polymers to be used in the basecoat are polyacrylates. Polyacrylates provide good flexibility and stabilize pigment dispersions in the basecoat.

In a preferred embodiment, the basecoat preferably includes a polymer or copolymer based on polyurethane and polymer or copolymer based on a polyacrylate. Such a combination brings excellent flexibility even in the presence of pigments.

Preferred polyacrylates are Roda™ Base 5514 from TFL and Primal™ HPB980 from LANXESS. A suitable polymeric acrylate emulsion is Bioflex™ KGA from LMF Biokimica.

A cross-linker may be incorporated in the basecoat to improve the strength and the adhesion to crust leather. Preferred cross-linkers include aldehyde based cross-linkers such as formaldehyde, melamine formaldehyde derivatives, urea formaldehyde resins, glyoxal and gluraraldehyde, epoxides, oxazolines, carbodiimides and isocyanates, isocyanates being particularly preferred. The dry weight of the cross-linker in the basecoat and/or topcoat is preferably less than 1.4 g/m$^2$, more preferably less than 1.0 g/m$^2$.

The basecoat is preferably applied by spraying, but may be applied by any coating technique known, such as knife coating, extrusion coating, slide hopper coating and curtain coating.

Topcoats

A topcoat is usually applied for enhancing the scratch resistance of the decorative image.

The topcoat may be applied as a single layer or may be applied as multiple layers. The multiple layers may have a different composition for improving properties like scratch resistance or reducing the amount of extractables.

In a preferred embodiment, the topcoat includes at least one barrier layer containing a thiol polymer having a molecular weight of at least 500 g/mol.

In the present invention, the wording of a "topcoat layer" is used for a layer other than a barrier layer, i.e. a layer in the topcoat that does not contain a thiol polymer having a molecular weight of at least 500 g/mol.

A topcoat layer may have the same or a similar composition as the basecoat. Usually, a topcoat is somewhat optimized according to the leather application. For example, flexibility does not play an important role for a leather book cover contrary to leather shoes. Hence, a protective topcoat layer for a book cover may be optimized towards scratch resistance rather than flexibility.

A topcoat layer, and also a barrier layer, preferably includes a polymer or copolymer based on polyurethane, as this has been found to improve the flexibility of the printed leather. The topcoat layer may preferably further include a polyamide polymer or copolymer, as polyamide has been found to improve the compatibility with the crust leather and to improve the scratch resistance of the topcoat.

Suitable polyurethanes include Urepal™ PU147 and PU181 from CHEMIPAL S.p.A.; Melio™ Promul 61 from

STAHL; Astacin™ Finish PS from BASF; Ecrothan™ 4075, 4078 and 4084 from MICHELMAN; Incorez™ CS8073 and CS065-195 from INCOREZ. The dry weight of the polyurethane in the topcoat is preferably in the range of 1 to 6 g/m$^2$.

Suitable polyamides include the PA emulsion types ED310 and 161148 CX from MICHELMAN. The dry weight of the polyamide in the topcoat is preferably less than 7 g/m$^2$, more preferably less than 5 g/m$^2$.

Other types of preferred polymers to be used in the topcoat include polyacrylates. Polyacrylates generally provide good flexibility and are preferably used alone or in combination with polyurethanes.

A cross-linker may be incorporated in the topcoat to improve the strength and the adhesion to ink layer. The dry weight of the cross-linker in the topcoat is preferably less than 1.4 g/m$^2$, more preferably less than 1.0 g/m$^2$.

Suitable polyacrylates and crosslinkers for the topcoat are given in the chapter on basecoats.

The topcoat is preferably applied by spraying, but may be applied by any coating technique known, such as knife coating, extrusion coating, slide hopper coating and curtain coating.

The topcoat is most preferably a transparent topcoat, but may be a translucent topcoat. By having a transparent topcoat, the decorative image is clearly visible through the topcoat. By using a translucent topcoat, a special aesthetic effect is created.

If a matt top surface is desired for the inkjet printed leather, a matting agent may be included. Any suitable matting may be used. Preferred matting agent include silica. A preferred commercially available example of a silica dispersion is Euderm™ SN2 from LANXESS.

Inkjet Inks

The inkjet inks that are printed on leather normally contain a colorant. The colorant may be a dye, but preferably a pigment is used because a decorative image made with colour pigments is less susceptible to light fading.

The pigmented inkjet inks preferably contain organic colour pigments as they allow for obtaining a high colour gamut on natural leather. The colour gamut represents the number of different colours that can be produced by an ink set. Carbon black and titanium dioxide are inorganic pigments, which can be advantageously used for composing respectively black and white pigmented inkjet inks.

The inkjet inks are radiation curable inks that can be cured by UV radiation if a photoinitiating system is present. Alternatively, the inkjet inks may be cured by electron beam curing. In the latter case, there is no need for photoinitiators in the inks, which is usually beneficial for reducing odour and migratable photodecomposition products.

For achieving good flexibility, the polymerizable composition of an inkjet ink preferably contains at least 60 wt% of monofunctional polymerizable compounds. More preferably between 85 and 95 wt% of monofunctional monomers and oligomers are used in the inkjet ink.

Colour Pigments

The pigmented inkjet inks preferably contain organic colour pigments as they allow for obtaining a high colour gamut on natural leather. Carbon black and titanium dioxide are inorganic pigments, which can be advantageously used in the present invention for composing respectively black and white pigmented inkjet inks.

An organic colour pigment may be chosen from those disclosed by HERBST, Willy, et al. Industrial Organic Pigments, Production, Properties, Applications. 3rd edition. Wiley - VCH , 2004. ISBN 3527305769.

Particular preferred pigments are C.I. Pigment Yellow 1, 3, 10, 12, 13, 14, 17, 55, 65, 73, 74, 75, 83, 93, 97, 109, 111, 120, 128, 138, 139, 150, 151, 154, 155, 175, 180, 181, 185, 194 and 213. For colour gamut and light stability, most preferably pigments for a yellow inkjet ink are selected from the group consisting of C.I. Pigment Yellow 120, 139, 150, 151, 155, 180, 213 and mixed crystals thereof.

Particular preferred pigments are C.I. Pigment Red 17, 22, 23, 41, 48:1, 48:2, 49:1, 49:2, 52:1, 57:1, 88, 112, 122, 144, 146, 149, 170, 175, 176, 184, 185, 188, 202, 206, 207, 210, 216, 221, 248, 251, 254, 255, 264, 266, 270 and 272.

Particular preferred pigments are C.I. Pigment Violet 19, 23, 32, and 37.

Most preferably pigments for a magenta or red inkjet ink are selected from the group consisting of C.I. Pigment Violet 19, C.I. Pigment Red 122, 176, 202 and 254, as well as mixed crystals containing one of the foregoing. The latter provide for good colour reproduction and light stability.

Particular preferred pigments are C.I. Pigment Blue 15:1, 15:2, 15:3, 15:4, 15:6, 16, 56, 61 and (bridged) aluminium phthalocyanine pigments. For colour gamut and light stability, most preferably C.I. Pigment Blue 15:3, or 15:4 is selected.

Other particular preferred pigments are C.I. Pigment Orange 5, 13, 16, 34, 40, 43, 59, 66, 67, 69, 71 and 73; C.I. Pigment Green 7 and 36; and C.I. Pigment Brown 6 and 7. These pigments can be used to enlarge the colour gamut by addition of an orange, green or brown ink to to the inkjet ink set.

Suitable pigments include mixed crystals of the above particular preferred pigments. Mixed crystals are also referred to as solid solutions. For example, under certain conditions different quinacridones mix with each other to form

solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia Magenta RT-355-D from BASF AG.

Carbon black is preferred as a black pigment. Suitable black pigments include carbon blacks such as Pigment Black 7 (e.g. Carbon Black MA8® from MITSUBISHI CHEMICAL), Regal® 400R, Mogul® L, Elftex® 320 from CABOT Co., or Carbon Black FW18, Special Black 250, Special Black 350, Special Black 550, Printex® 25, Printex® 35, Printex® 55, Printex® 90, Printex® 150T from DEGUSSA. In a preferred embodiment, the carbon black pigment used is a pigment having less than 0.15% of tolueneextractable fraction using the method as described in section III, paragraph 5 of the Resolution AP(89) 1 dated 13 September 1989 published by the Council of Europe.

It is also possible to make mixtures of pigments. For example, in a preferred embodiment a neutral black inkjet ink is used. Such a black inkjet ink is preferably obtained by mixing a black pigment and a colour pigment having an absorption maximum between 500 and 700 nm, such as a cyan and/or magenta pigment into the ink. A neutral black inkjet ink avoids the application of cyan or magenta inks for correcting the blackness, which leads to a thinner ink layer having an improved flexibility.

Pigment particles in inkjet ink should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 0.500 $\mu$m. For an organic colour pigment and inorganic black pigments, the average pigment particle size is particularly preferably between 0.070 and 0.200 $\mu$m and most preferably, between 0.100 $\mu$m and 0.150 $\mu$m. An average particle size smaller than 0.050 $\mu$m is less desirable because it decreases light-fastness, while an average particle size larger than 0.200 $\mu$m reduces the colour gamut.

The numeric average pigment particle size of pigment particles is best determined with a Brookhaven Instruments Particle Sizer BI90plus based upon the principle of dynamic light scattering. The ink is then diluted, for example, with ethyl acetate to a pigment concentration of 0.002 wt%. The measurement settings of the BI90plus are: 5 runs at 23°C, angle of 90°, wavelength of 635 nm and graphics = correction function.

The inkjet ink may also include a white pigment as colorant, more preferably the white pigment is present in the free-radical curable inkjet ink in an amount of at least 15.0 wt%, preferably 17.0 to 35.0 wt%, more preferably 18.0 to 25.0 wt% based on the total weight of the free-radical curable inkjet ink. In the above ranges, good opacity is obtained with thin white ink layers, while the viscosity does not increase too much so that jetting performance is not impaired.

A white pigment may be employed singly or in combination in a white inkjet ink. The pigment for a white inkjet ink preferably has a refractive index greater than 1.60, preferably greater than 2.00, most preferably greater than 2.60. Having the above refractive index, the dry thickness of the white ink layer can be minimized which is beneficial for flexibility.

Preferably titanium dioxide is used for the pigment with a refractive index greater than 1.60. Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention. It is preferred to make the most possible use of characteristics and to make selections according to the use thereof. The use of the anatase type having a low density and a small particle size can achieve superior dispersion stability, ink storage stability and ejectability. At least two different crystalline forms may be used in combination. The combined use of the anatase type and the rutile type which exhibits a high colouring power can reduce the total amount of titanium oxide, leading to improved storage stability and ejection performance of ink.

For surface treatment of the titanium oxide, an aqueous treatment or a gas phase treatment is applied, and an alumina-silica treating agent is usually employed. Untreated, alumina treated, silica treated or alumina-silica treated titanium oxide are employable. Alone or in addition to the previous surface treatments, an organic surface treatment may be used.

The numeric average particle diameter of the titanium oxide or other white pigments is preferably from 180 to 400 nm, more preferably from 200 to 330 nm, and most preferably from 220 to 300 nm. Sufficient hiding power cannot be obtained when the average diameter is less than 180 nm, and the storage ability and the jet-out suitability of the ink tend to degrade above the upper size limits. The determination of the numeric average particle diameter is best performed by photon correlation spectroscopy at a wavelength of 633 nm with a 4mW He-Ne laser on a diluted sample of the pigmented inkjet ink. A suitable particle size analyzer used was a Malvern™ nano-S available from Goffin-Meyvis. A sample can be prepared by addition of one drop of ink to a cuvet containing 1.5 mL ethyl acetate and mixed until a homogenous sample was obtained. The measured particle size is the average value of 3 consecutive measurements

consisting of 6 runs of 20 seconds.

Dispersants

Pigments are usually stabilized in the dispersion medium of polymerizable compounds by dispersing agents, such as polymeric dispersants or surfactants. Alternatively, the surface of the pigments can be modified to obtain so-called "self-dispersible" or "self-dispersing" pigments, i.e. pigments that are dispersible in the dispersion medium without dispersants.

In a preferred embodiment of the pigmented free-radical curable inkjet ink, the pigment is stabilized by a polymeric dispersant

The pigment is preferably used in a concentrated pigment dispersion for preparing inkjet inks in an amount of 10 to 40 wt%, more preferably of 15 to 30 wt% based on the total weight of the pigment dispersion. The concentrated pigment dispersion is then diluted into an inkjet ink.

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:

- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000. Larger molecular weight dispersants tend to increase the viscosity of the ink too much without adequately providing good dispersion stability.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:

- DISPERBYK™ dispersants available from BYK CHEMIE GMBH;
- SOLSPERSE™ dispersants available from LUBRIZOL;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from BASF;
- DISPONER™ dispersants from DEUCHEM.

Particularly preferred polymeric dispersants include Solsperse™ dispersants from LUBRIZOL, Efka™ dispersants from BASF and Disperbyk™ dispersants from BYK CHEMIE GMBH. Particularly preferred dispersants are Solsperse™ 32000, 35000 and 39000 dispersants from LUBRIZOL.

The polymeric dispersant is preferably used in an amount of 2 to 200 wt%, more preferably 10 to 100 wt%, most preferably 50 to 90 wt% based on the weight of the pigment. An amount between 2 and 90 wt% provides for a good dispersion stability in combination with minimal effect on the ink viscosity.

Dispersion Synergists

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant/wt% dispersion synergist is selected between 2:1 to 100:1, preferably between 2:1 and 20:1.

Suitable dispersion synergists that are commercially available include Solsperse™ 5000 and Solsperse™ 22000 from LUBRIZOL.

Particular preferred dispersion synergists include those disclosed in EP 1790698 A (AGFA GRAPHICS), EP 1790696 A (AGFA GRAPHICS), WO 2007/060255 (AGFA GRAPHICS) and EP 1790695 A (AGFA GRAPHICS).

In dispersing C.I. Pigment Blue 15:3, the use of a sulfonated Cu-phthalocyanine dispersion synergist, e.g. Solsperse™ 5000 from LUBRIZOL is preferred. Suitable dispersion synergists for yellow inkjet inks include those disclosed in EP 1790697 A (AGFA GRAPHICS).

Polymerizable compounds

Any polymerizable compound commonly known in the art may be employed. The polymerizable compound may be any monomer or oligomer found in the Polymer Handbook Vol 1 + 2, 4th edition, edited by J. BRANDRUP et al., Wiley-Interscience, 1999. An oligomer in the present invention is understood to contain 2 or more repeating monomeric units.

A combination of monomers and oligomers may also be used. The monomers and oligomers may possess different degrees of functionality, and a mixture including combinations of mono-, di-, tri-and higher functionality monomers and oligomers may be used.

In a preferred embodiment, a pigmented free-radical curable inkjet ink used in the present invention includes a polymerizable composition monofunctional polyfunctional polymerizable compounds fulfilling the following requirements A to E: A) 65.0 to 95.0 wt% of monofunctional polymerizable compounds with the wt% based on the total weight of the polymerizable composition; B) the polymerizable composition includes a monofunctional acrylate; C) 8.0 to 25.0 wt% of a N-vinyl oxazolidinone according to the Formula 1 based on the total weight of the UV curable inkjet ink, wherein the N-vinyl oxazolidinone according to the Formula 1 is:

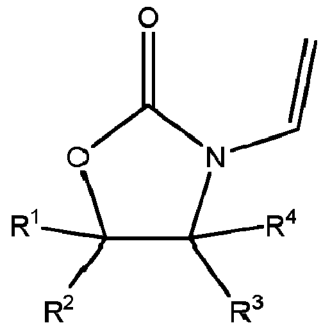

Formula 1,

wherein $R^1$ to $R^4$ are not limited other than by the constraints imposed by the use in an ink-jet ink, such as viscosity and ink stability. Preferred substituents for $R^1$ to $R^4$ include hydrogen, alkyl, cycloalkyl, aryl and combinations thereof, any of which may be interrupted by heteroatoms; D) 3.0 to 30.0 wt% of a polyethyleneglycol diacrylate based on the total weight of the UV curable inkjet ink; E) the polyethyleneglycol diacrylate has a molecular weight MW between 350 and 750; and F) the polyfunctional polymerizable compounds contain the polyethyleneglycol diacrylate in an amount of 60 to 100 wt% based on the total weight of the polyfunctional polymerizable compounds.

In a more preferred embodiment of the pigmented free-radical curable inkjet ink, the N-vinyl oxazolidinone according to the Formula 1 is N-vinyl-5-methyl2-oxazolidinone.

In a preferred embodiment of the pigmented free-radical curable inkjet ink, the polymerizable composition has a double bond density DBD in the range of 5.12 to 5.60 mmol double bonds/g, wherein the double bond density DBD is calculated by the formula:

$$DBD = \frac{\sum_{i=1 \text{ to } n}^{n} \frac{F(i) \times wt\%(i)}{MW(i)}}{\sum_{i=1 \text{ to } n}^{n} wt\%(i)},$$

wherein

i represents an integer of 1 to n;
n represents the number of polymerizable compounds in the UV free-radical curable inkjet ink;
F(i) represents the functionality of polymerizable compound i;
MW(i) represents the molecular weight of polymerizable compound i; and wt%(i) is the weight percentage of polymerizable compound i based on the total weight of the pigmented free-radical curable inkjet ink. By selecting a double bond density DBD in the above range, an ink viscosity can be obtained that has superior printing reliability.

In a more preferred embodiment of the pigmented free-radical curable inkjet ink, the polyethyleneglycol diacrylate has a molecular weight MW between 400 and 600. Below a MW of 400 the flexibility tends to deteriorate somewhat, while above a MW of 600 the stickiness tends to deteriorate somewhat.

In a more preferred embodiment of the pigmented free-radical curable inkjet ink, the polyfunctional polymerizable compounds consist of difunctional polymerizable compounds. A higher functionality than 2 of the polyfunctional polymerizable compounds is beneficial for stickiness, but rapidly decreases the flexibility.

Photoinitiating System

A UV curable inkjet ink includes a photoinitiating system containing one or more photoinitiators and optionally co-initiators.

The photoinitiator is preferably a Norrish type I initiator and/or a Norrish type II initiator. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or a co-initiator.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

Norrish Type I Photoinitiators

The Norrish Type I photoinitiator is preferably selected from the group consisting of benzoinethers, benzil ketals, α-haloketones, α, α-dialkoxyaceto phenones, α-hydroxyalkylphenones, a-halosulfones, α-aminoalkylphenones, acylphosphine oxides, acylphosphine sulphides and phenylglyoxalates.

For high curing speed with UV LEDs emitting in the range of 360 - 420 nm, the photoinitiator preferably includes an acylphosphine oxide photoinitiator and/or an α-hydroxy ketone photoinitiator, most preferably at least an acylphosphine oxide photoinitiator.

In a preferred embodiment of pigmented free-radical curable inkjet ink, the photoinitiator includes ethyl phenyl(2,4,6-trimethylbenzoyl)phosphinate, known as TPO-L. TPO-L is a liquid photoinitiator and thus creates no solubility problems in the pigmented free-radical curable inkjet ink contrary to, for instance, bis(2,4,6-trimethylbenzoyl)-phenyl phosphine oxide.

A free-radical curable inkjet ink contains the acylphosphine oxide photoinitiator preferably present in an amount of at least 3.0 wt%, more preferably in an amount of 4.0 to 16.0 wt% based on the total weight of the free-radical curable inkjet ink.

Suitable examples of the acylphosphine oxide photoinitiators include bis(2,4,6-trimethylbenzoyl)-phenyl phosphine oxide, 2,4,6-trimethylbenzoyl diphenyl phosphine oxide, and ethyl (2,4,6-trimethylbenzoyl) phenyl phosphinate, bis-(2,6-dimethoxybenzoyl) 2,4,4-trimethylpentyl phosphine oxide. Such acylphosphine oxide photoinitiators are commercially available, for example, as Omnirad™ 819, Omnirad™ TPO and Omnirad™ TPO-L from IGM Resins.

The acylphosphine oxide may also be a polymeric compound, such as Omnipol™ TP from IGM Resins.

In a particularly preferred embodiment, the acylphosphine oxide photoinitiator may include an acyl group containing a polymerizable group or an acyl group selected from the group consisting of a benzoyl group substituted by an urea group or an oxalylamide group; a 2,6-dimethyl benzoyl group substituted in position 3 by an urea group or an oxalylamide group; a 2,6-dimethoxy benzoyl group substituted in position 3 by an urea group or an oxalylamide group; a 2,4,6-trimethyl benzoyl group substituted in position 3 by an urea group or an oxalylamide group; and a 2,4,6-trimethoxybenzoyl group substituted in position 3 by an urea group or an oxalylamide group. By using such an acylphosphine oxide photoinitiator, no mesitaldehyde is released after UV curing, which causes a bad odour of the printed article.

Suitable acylphosphine oxide photoinitiators having an acyl group substituted by an urea group or an oxalylamide group are disclosed in WO 2019/243039 (AGFA).

Suitable acylphosphine oxide photoinitiators including an acyl group containing a polymerizable group are disclosed by WO 2014/051026 (FUJIFILM).

A combination of different acylphosphine oxide photoinitiators may also be used. For example, a combination

of monofunctional acylphosphine oxide photoinitiators, such as TPO or TPO-L, and multifunctional acylphosphine oxide photoinitiators, such as bis(2,4,6-trimethylbenzoyl)-phenyl phosphine oxide. Preferably such a combination contains more monofunctional acylphosphine oxide photoinitiator than multifunctional acylphosphine oxide photoinitiator. A combination containing at least 70 wt% of monofunctional acylphosphine oxide photoinitiator, preferably TPO-L, generally exhibits a higher curing efficiency.

Alternatively, the acylphosphine oxide is a polymeric compound wherein the acylphosphine oxide structure is bonded to a polymeric chain on an acyl group side thereof. Suitable compounds are disclosed in WO 2014/129213 (FUJIFILM). By having the acyl group bonded to the polymeric chain, the odor of the printed article is also suppressed.

Suitable examples of the α-hydroxy ketone photoinitiators include, but are not particularly limited to, 1-hydroxycyclohexyl phenyl ketone, 2-hydroxy-2-methyl-1-phenyl propane-1-one and 1-[4-(2-hydroxyethoxy)-phenyl]2-hydroxy-2-methyl-1-propane-1-on.

Examples of commercially α-hydroxy ketone photoinitiators include, but are not particularly limited to, Omnirad™ 1173, Omnirad™ 184 and Omnirad™ 127 and Omnirad™ 4817 from IGM RESINS.

The content of the α-hydroxy ketone is preferably 1 to 10 wt%, more preferably 2 to 8 wt%, and still more preferably 3 to 6 wt% based on the total weight of the UV LED free-radical curable inkjet ink.

In a particularly preferred embodiment, the α-hydroxy ketone photoinitiator is a polymeric or a polymerizable photoinitiator.

An example of a suitable polymeric α-hydroxy ketone photoinitiator is available as Esacure™ KIP150 from IGM RESINS.

Suitable polymerizable α-hydroxy ketone photoinitiators are disclosed in US 4922004 (MERCK), such as 4-(2-acryloyloxyethoxy)-phenyl 2-acryloyloxy-2-propyl ketone prepared in Example 3.

Norrish Type II Photoinitiators

A free-radical curable inkjet ink may contain a Norrish Type II photoinitiator including a photoinitiating moiety selected from the group consisting of a thioxanthone group, a carbazole group and a benzophenone group. A Norrish Type II photoinitiator containing a thioxanthone group or a carbazole group is particularly preferred as it is advantageous for UV LED curing, especially for UV LEDs having an emission wavelength of 370 nm or more.

Suitable examples of Norrish Type II photoinitiators containing a thioxanthone group include, but are not particularly limited to, thioxanthone; diethylthioxanthone, such as 2,4-diethylthioxanthone; isopropylthioxanthone, such as 2-isopropylthioxanthone and 4-isopropylthioxanthone; and chlorothioxanthone, such as 2-chlorothioxanthone.

Specific examples of commercially available Norrish Type II photoinitiators containing a thioxanthone group are Speedcure™ DETX (2,4-diethylthioxanthone) and Speedcure™ ITX (2-isopropylthioxanthone) from LAMBSON and Kayacure™ DETX-S (2,4-diethylthioxanthone) from Nippon Kayaku Co..

Preferred carbazole photoinitiators are disclosed by EP 2509948 A (AGFA). These carbazole photoinitiators have the advantage over thioxanthone photoinitiators of exhibiting less photo-yellowing.

Suitable examples of Norrish Type II photoinitiators containing a benzophenone group include, but are not particularly limited to, benzophenone; methylbenzophenone; methyl-2-benzoylbenzoate, phenylbenzophenone, such as 4-phenylbenzophenone; trimethylbenzophenone; bis(alkylamino)benzophenone; and 4-(dialkylamino)benzophenone.

Specific examples of commercially available Norrish Type II photoinitiators containing a benzophenone group are Omnirad™ 4MBZ and Omnirad™ BP from IGM RESINS, Speedcure™ PBZ and Speedcure™ 5040 from LAMBSON. The latter is a mixture of benzophenone and thioxanthone.

Preferred examples of polymerizable Norrish Type II photoinitiators including a photoinitiating moiety selected from the group consisting of a thioxanthone group or a benzophenone group are disclosed in EP 2161264 A (AGFA), EP 2199273 A (AGFA) and EP 2684876 A (AGFA).

Preferred examples of polymeric Norrish Type II photoinitiators including a photoinitiating moiety selected from the group consisting of a thioxanthone group or a benzophenone group are disclosed in EP 1616920 A (AGFA) and EP 1616899 A (AGFA).

Commercial examples of polymeric thioxanthones and benzophenones include Omnipol™ BP, Omnipol™ TX, and Omnipol™ 2702 from IGM RESINS.

The content of the Norrish Type II photoinitiator including a photoinitiating moiety selected from the group consisting of a thioxanthone group, a carbazole group and a benzophenone group is preferably 0.5 to 7.5 wt%, more preferably 1 to 5 wt% based on the total weight of the free-radical curable inkjet ink. However, if the Norrish Type II photoinitiator is a polymerizable or a polymeric thioxanthone or carbazole compound, the content may be higher, preferably up to 25 wt%, more preferably up to 15 wt% based on the total weight of a free-radical curable inkjet ink.

Polymerization Synergists

In order to increase the photosensitivity further, the free-radical curable inkjet ink may additionally contain one or more co-initiators, also called polymerization synergists, for which usually amine synergists are used.

Suitable examples of amine synergists can be categorized in three groups:

1) tertiary aliphatic amines such as methyldiethanolamine, dimethylethanolamine, triethanolamine, triethylamine and N-methylmorpholine;

(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and

(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

In a preferred embodiment of the free-radical curable inkjet ink, the polymerization synergist is an acrylated amine synergist.

Suitable amine synergists are commercially available as Omnipol™ ASA, Omnipol™ 894 nad Esacure™ A198 from IGM Resins.

Preferred commercial acrylated amine synergists include Photomer™ 4068, 4250, 4771, 4775, 4780, 4967 and 5006 from IGM Resins.

Polymerization Inhibitors

A free-radical curable inkjet ink may contain a polymerization inhibitor to prevent undesired polymerization during transport or storage. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from BASF; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% of the total free-radical curable inkjet ink.

In a preferred embodiment, the polymerization inhibitor is a polymerizable inhibitor, preferably containing one or more acrylate groups for achieving good reactivity.

Surfactants

A free-radical curable inkjet ink may contain at least one surfactant. The surfactant can be anionic, cationic, non-ionic, or zwitter-ionic and is preferably added in a total quantity less than 3 wt%, more preferably less than 2 wt%, and most preferably no more than 1 wt% based on the total weight of the free-radical curable inkjet ink.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie and Tegoglide™ 410 from EVONIK.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl™ 350 , a silicone diacrylate from Cytec; the polyether modified acrylated polydimethylsiloxane BYK™ UV3500 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, and Tego™ Rad 2700, Tego™

RC711 from EVONIK; Silaplane™ FM7711, Silaplane™ FM7721, Silaplane™ FM7731, Silaplane™ FM0711, Silaplane™ FM0721, Silaplane™ FM0725, Silaplane™ TM0701, Silaplane™ TM0701T all manufactured by Chisso Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by Gelest, Inc..

Preparation of Pigmented Free-radical Curable Inkjet Inks

Pigment dispersions may be prepared by precipitating or milling the pigment in the dispersion medium in the presence of the dispersant.

A method of manufacturing a free-radical curable inkjet ink preferable includes the steps of a) milling a colour pigment in the presence of a polymeric dispersant and a polymerizable compound into a concentrated pigment dispersion; and

b) diluting the concentrated pigment dispersion with polymerizable compounds and other additives so that a free-radical curable inkjet ink is obtained with the correct viscosity and surface tension.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium beads.

In the process of mixing, milling and dispersion, each process is preferably performed with cooling to prevent build-up of heat, and as much as possible under light conditions in which actinic radiation has been substantially excluded.

The pigment dispersion may contain more than one pigment. Such a pigment dispersion may be prepared using separate dispersions for each pigment, or alternatively several pigments may be mixed and co-milled in preparing the dispersion.

The dispersion process can be carried out in a continuous, batch or semibatch mode.

The preferred amounts and ratios of the ingredients of the mill grind will vary widely depending upon the specific materials and the intended applications. The contents of the milling mixture comprise the mill grind and the milling media. The mill grind comprises pigment, polymeric dispersant and a liquid carrier.

The milling time can vary widely and depends upon the pigment, the selected mechanical means and residence conditions, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, e.g. for a bead mill. The milled pigment concentrate is preferably separated from the milling media by filtration.

In general, it is desirable to make inkjet inks in the form of a concentrated mill grind, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage.

Inkjet Printing Devices

Free-radical curable inkjet inks may be jetted by one or more print heads ejecting small droplets of ink in a controlled manner through nozzles onto an ink-receiver surface, which is moving relative to the print head(s).

A preferred print head for an inkjet printing system in the present invention is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However, the inkjet printing method used in the present invention is not restricted to piezoelectric inkjet printing. Other inkjet print heads can be used and include various types, such as a continuous type and thermal, electrostatic and acoustic drop on demand type.

A preferred piezoelectric print head is a so called push mode type piezoelectric print head, which has a rather large piezo-element capable of ejecting also more viscous inkjet ink droplets. Such a print head is available from RICOH as the GEN5s print head.

Another preferred piezoelectric print head is a so-called through-flow piezoelectric drop-on-demand print head. Such a print head is available from TOSHIBA TEC as the CF1ou print head. Through-flow print heads are preferred

because they enhance the reliability of inkjet printing as the ink continuously flows through the print head.

An inkjet print head normally scans back and forth in a transversal direction across the moving ink-receiver surface. Sometimes the inkjet print head does not print on the way back, however bi-directional printing is preferred for obtaining a high areal throughput.

Another preferred inkjet device uses a "single pass printing process", which can be performed by using page wide inkjet print heads or multiple staggered inkjet print heads that cover the entire width of the substrate surface. In a single pass printing process, the inkjet print heads usually remain stationary and the substrate is transported under the inkjet print heads.

Curing Devices

Free-radical curable inkjet inks used in the present invention are cured by exposing them to actinic radiation, preferably to ultraviolet radiation. The actinic radiation may also originate from electron beam curing devices.

The pigmented free-radical curable inkjet inks in the present invention can also be advantageously for electron beam curing, as the latter also cures the interior of a layer of a polymerizable composition better than the surface thereof. Furthermore, electron beam curing eliminates the need for photoinitiators, which is a financial benefit.

In inkjet printing, the curing means may be arranged in combination with the print head of the inkjet printer, travelling therewith so that the curable composition is exposed to curing radiation very shortly after been jetted, which is beneficial for image quality.

In such an arrangement it can be difficult to provide a small enough radiation source connected to and travelling with the print head. Therefore, a static fixed radiation source may be employed, e.g. a source of curing UV-light, connected to the radiation source by means of flexible radiation conductive means such as a fiber optic bundle or an internally reflective flexible tube.

Alternatively, the actinic radiation may be supplied from a fixed source to the radiation head by an arrangement of mirrors including a mirror upon the radiation head.

The source of radiation arranged not to move with the print head, may also be an elongated radiation source extending transversely across the ink-receiver surface to be cured and adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:

- UV-A: 400 nm to 320 nm
- UV-B: 320 nm to 290 nm
- UV-C: 290 nm to 100 nm.

It is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

In a preferred embodiment of the method of inkjet printing used in the present invention, the inkjet printing device contains UV LEDs with a wavelength larger than 360 nm, preferably UV LEDs with a wavelength larger than 380 nm, and most preferably UV LEDs with a wavelength of about 395 nm.

For facilitating curing, the inkjet printer often includes one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

EXAM PLES

## Measurement Methods

1. GPC method

The molecular weight Mw of a polymer was determined by gel permeation chromatography. The sample preparation was performed by dissolving 25 mg of the polymer in 10 mL THF (Tetrahydrofuran). As chromatographic conditions were used: injecting 100 μL of the sample on a 3x Mixed B column set with eluent THF + 5% HoAC, and a detection with refractive index detector. Polystyrene standards were used for a calibration curve.

2. Migration Test

The migratables were determined by UPLC using a column Acquity UPLC BEH C18 1/7 μm 100x2.1 mm at 40°C.
A sample was prepared by placing a punch of 17 mm diameter (ink layer facing the water) in the lid of a GC headspace-vial and extracting it with 2 ml of $H_2O$ for 1 hour at room temperature by use of a mixing console. The extracted surface = 1.131 $cm^2$ (internal diameter of the GC headspace vial opening = 12mm).
After the extraction,1 ml $CH_3CN$ was added at the GC headspace vial. The sample was mixed and filtered over a MN chromafil 0.2 μm filter. 7.5 μL of the sample was then injected and quantification was performed with DAD by use of an external calibration point of each compound. The following settings (Table 1) were used for the UPLC using water for solvent A and solvent acetonitrile for solvent B at a flow of 0.35 mL/min at max pressure limit of 1000 bar. Each sample is measured twice and an average value for each migratable component is given.

Table 1

| Time (min) | A (%) | B (%) |
|---|---|---|
| 0.00 | 80 | 20 |
| 1.00 | 80 | 20 |
| 9.00 | | 100 |
| 15.00 | | 100 |
| 15.10 | 80 | 20 |
| 18.00 | 80 | 20 |

3. Average Particle Size

The particle size of pigment particles in a concentrated pigment dispersion was determined by photon correlation spectroscopy at a wavelength of 633 nm with a 4mW HeNe laser on a diluted sample of the pigment dispersion. The particle size analyzer used was a Malvern™ nano-S available from Goffin-Meyvis.
The sample was prepared by addition of one drop of pigment dispersion to a cuvette containing 1.5 mL ethyl acetate and mixed until a homogenous sample was obtained. The measured particle size is the average value of 3 consecutive measurements consisting of 6 runs of 20 seconds.

## Materials

All materials used in the following examples were readily available from standard sources such as Aldrich Chemical Co. (Belgium) and Acros (Belgium) unless otherwise specified. Any water used was demineralized water.
ETTMP is an ethoxylated trimethylolpropane tri(3-mercaptopropionate) available as Thiocure® ETTMP1300 (CAS-No. 345352-19-4) from Bruno Bock Chemische Fabrik GmbH & Co. KG having a SH-content of 7.1 wt% according to the supplier's technical data sheet. The molecular weight Mw determined by the above-described GPC-method was 1744 g/mol (pd = 1.08).
**X12** is an alkoxysilane involving (3-isocyanatopropyl)trimethoxy-reaction products with pentaerythritol tetrakis(3-mercaptopropionate) and available as X-12-1154 (CAS-No. 1639946-87-4) from Shin-Etsu Chemical Co. Ltd. having a SH content of 240 g/mol according to the supplier's technical data sheet.. The molecular weight Mw determined by the above-described GPC-method was 1449 g/mol (pd = 1.33).
**KR518** is an alkoxysilane having a siloxane chain substituted by mercapto groups and available as KR-518

from Shin-Etsu Chemical Co. Ltd. having a SH content of 800 g/mol according to the supplier's technical data sheet. The molecular weight Mw determined by the above-described GPC-method was 3071 g/mol.

SELVOL is a polyvinyl alcohol/vinyl amine copolymer available as Selvol® Ultiloc 5003 from Sekisui Specialty Chemicals Europe S.L.

**Roda® Fix SFD** is a 26% aqueous polyurethane dispersion from TFL LEDERTECHNIK GMBH.

**Roda® Car Dull 92/N** is a 24% aqueous polyurethane dispersion from TFL LEDERTECHNIK GMBH.

**Roda® Feel S 5796** is a 17% aqueous silicone emulsion from TFL LEDERTECHNIK GMBH.

**Roda® Link C 70** is a 55% aqueous crosslinker emulsion from TFL LEDERTECHNIK GMBH.

**TiO2** is a titanium dioxide pigment available as Tronox™ CR834 from TRONOX PIGMENTS BV.

**PB15:4** is an abbreviation used for Sunfast™ Blue 15:4, a C.I. Pigment Blue 15:4 pigment from SUN CHEMICAL CORPORATION.

**PB7** is an abbreviation used for Special Black™ 550, which is a carbon black available from EVONIK.

**PY155** is an abbreviation used for Inkjet Yellow™ 4GC, which is a C.I. Pigment Yellow 155 pigment from CLARIANT.

**PR122** is the abbreviation for C.I. Pigment Red 122 for which PIGMENT RED 122 TCR122031J from TRUST CHEM EUROPE BV was used.

**SYN** is the dispersion synergist according to Formula (A):

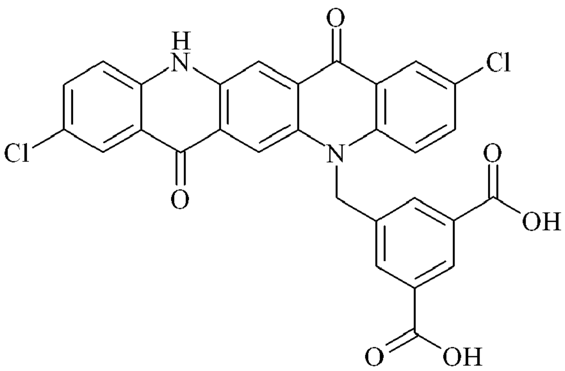

Formula (A),

and was synthesized in the same manner as described in Example 1of WO 2007/060254 (AGFA GRAPHICS) for the synergist QAD-3.

**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed.

**PEA** is 2-phenoxyethyl acrylate available as Sartomer™ SR339C from ARKEMA.

**V-MOX** is vinyl methyl oxazolidinone (CAS No.: 3395-98-0) available as VMOX™ from BASF.

**TBCH** is 4-tert.butylcyclohexylacrylate available under the trade name of Sartomer CD217 from ARKEMA.

**IDA** is isodecyl acrylate available as Sartomer™ SR395 from ARKEMA.

**G1122** is a monofunctional urethane acrylate having a $T_g$ of -3°C and available as Genomer™ 1122 from RAHN having the Formula (B):

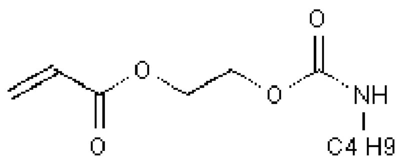

Formula (B).

**PDA** is polyethyleneglycol 400 diacrylate available as Sartomer™ SR344 from ARKEMA.

**DPGDA** is dipropylene glycol diacrylate available as Sartomer™ SR508 from ARKEMA.

**OLIGO** is a urethane acrylate oligomer having two acrylate groups (MW=1900) available as Sartomer™ CN963B80 from ARKEMA.

**INHIB** is a mixture forming a polymerization inhibitor having a composition according to Table 2.

Table 2

| Component | wt% |
|---|---|
| DPGDA | 82.4 |
| p-methoxyphenol | 4.0 |
| BHT | 10.0 |
| Cupferron™ AL | 3.6 |

**Cupferron™ AL** is aluminum N-nitrosophenylhydroxylamine from WAKO CHEMICALS LTD.

**BHT** is butylated hydroxytoluene.

**UV10** is 4-hydroxy-2,2,6,6-tetramethylpiperidinooxy sebacate available as Irgastab™ UV 10 from BASF.

**TPL** is ethyl phenyl(2,4,6-trimethylbenzoyl)phosphinate available as SpeedCure™ TPO-L from ARKEMA.

**ITX** is Darocur™ ITX is an isomeric mixture of 2- and 4-isopropyl thioxanthone from BASF.

**T410** is a silicone surfactant available as Tegoglide™ 410 from EVONIK.

**RL** is a red dyed bovine leather having a red pigmented basecoat available as TFL Crust-Microtec Red from TFL LEDERTECHNIK GMBH.

**WL** is a white bovine leather having a white pigmented basecoat available as TFL Crust-Microtec White from TFL LEDERTECHNIK GMBH.

**PVA1** a polyvinylacohol having a hydrolysis degree of 98 mol% available as Poval® 4-98 from KURARAY.

**PVA2-sol** is an aqueous solution of 20 w% of a polyvinylacohol having a hydrolysis degree of 88 mol% available as Poval® 4-88 from KURARAY and 0.2 w% of Biocide.

**SURF** is a fluorosurfactant available as Capstone® FS-3100 from DUPONT.

**Biocide** is a 5% aqueous solution of Proxel K (CASRN127553-58-6) available from ARCH UK BIOCIDES.

Example 1

This example illustrates the effect of an extra barrier layer containing a polymeric thiol on the migrateables from an UV cured inkjet ink layer.

Preparation of Concentrated Pigment Dispersion CPK

A concentrated pigment dispersion CPK was prepared by mixing its components according to Table 3 for 30 minutes using a DISPERLUX™ disperser from DISPERLUX S.A.R.L., Luxembourg. The dispersion was then milled using a Bachofen DYNOMILL ECM Poly mill filled with 0.4 mm yttrium stabilized zirconia beads from TOSOH. The mixture was circulated over the mill for 3 hours and 15 minutes. After milling, the concentrated pigment dispersion was discharged over a 1 μm filter into a vessel. The concentrated pigment dispersion CPK had an average particle of 109 nm.

Table 3

| wt% of component: | CPK |
|---|---|
| PB7 | 13.32 |
| PB15:4 | 4.77 |
| PR122 | 3.33 |
| **SYN** | 0.13 |
| **DB162** | 9.13 |
| **INHIB** | 2.04 |
| **DPGDA** | 1.85 |
| **PEA** | 65.43 |

Preparation of Concentrated Pigment Dispersion CPC

A concentrated pigment dispersion CPC was prepared by mixing its components according to Table 4 for 30 minutes using a DISPERLUX™ disperser from DISPERLUX S.A.R.L., Luxembourg. The dispersion was then milled using a Bachofen DYNOMILL ECM Poly mill filled with 0.4 mm yttrium stabilized zirconia beads from TOSOH. The mixture was circulated over the mill for 4 hours and 45 minutes. After milling, the concentrated pigment dispersion was discharged over a 1 μm filter into a vessel. The concentrated pigment dispersion CPC had an average particle of 96 nm.

Table 4

| wt% of component: | CPC |
|---|---|
| **PB15:4** | 25.00 |
| **DB162** | 10.00 |
| **INHIB** | 1.00 |
| **PEA** | 64.00 |

Preparation of Concentrated Pigment Dispersion CPM

A concentrated pigment dispersion CPM was prepared by mixing its components according to Table 5 for 30 minutes using a DISPERLUX™ disperser from DISPERLUX S.A.R.L., Luxembourg. The dispersion was then milled using a Bachofen DYNOMILL ECM Poly mill filled with 0.4 mm yttrium stabilized zirconia beads from TOSOH. The mixture was circulated over the mill for 6 hours and 11 minutes. After milling, the concentrated pigment dispersion was discharged over a 1 μm filter into a vessel. The concentrated pigment dispersion CPM had an average particle of 116 nm.

Table 5

| wt% of component: | CPM |
|---|---|
| **PR122** | 20.00 |
| **SYN** | 1.00 |
| **DB162** | 10.00 |
| **INHIB** | 1.00 |
| **PEA** | 68.00 |

Preparation of Concentrated Pigment Dispersion CPY

A concentrated pigment dispersion CPY was prepared by mixing its components according to Table 6 for 30 minutes using a DISPERLUX™ disperser from DISPERLUX S.A.R.L., Luxembourg. The dispersion was then milled using a Bachofen DYNOMILL ECM Poly mill filled with 0.4 mm yttrium stabilized zirconia beads from TOSOH. The mixture was circulated over the mill for 2 hours and 20 minutes. After milling, the concentrated pigment dispersion was discharged over a 1 μm filter into a vessel. The concentrated pigment dispersion CPY had an average particle of 151 nm.

Table 6

| wt% of component: | CPY |
|---|---|
| **PY155** | 21.43 |
| **DB162** | 6.86 |
| **INHIB** | 1.00 |
| **PEA** | 70.71 |

Preparation of Concentrated Pigment Dispersion CPW

A concentrated pigment dispersion CPW was prepared by mixing its components according to Table 7 for 70

minutes using a DISPERLUX™ disperser from DISPERLUX S.A.R.L., Luxembourg. The dispersion was then milled using a Bachofen DYNOMILL ECM Poly mill filled with 0.4 mm yttrium stabilized zirconia beads from TOSOH. The mixture was circulated over the mill for 2 hours and 33 minutes. After milling, the concentrated pigment dispersion was discharged over a 1 μm filter into a vessel. The concentrated pigment dispersion CPW had an average particle of 200 nm.

**Table 7**

| wt% of component: | CPW |
|---|---|
| **TiO2** | 50.0 |
| **DB162** | 4.0 |
| **INHIB** | 3.0 |
| **PEA** | 43.0 |

Preparation of UV Curable Inkjet Inks

The above prepared concentrated pigment dispersions were used to prepare the free-radical curable inkjet inks Ink-K, Ink-C, Ink-M, Ink-Y, and Ink-W according to Table 8.

**Table 8**

| Wt% of component: | Ink-K | Ink-C | Ink-M | Ink-Y | Ink-W |
|---|---|---|---|---|---|
| **CPK** | 12.70 | | | | |
| **CPC** | | 10.00 | | | |
| **CPM** | | | 17.50 | | |
| **CPY** | | | | 14.00 | |
| **CPW** | | | | | 32.00 |
| **PEA** | 32.41 | 31.95 | 28.02 | 30.49 | 21.36 |
| **V-MOX** | 8.50 | 10.00 | 10.00 | 9.00 | 8.00 |
| **PDA** | 6.00 | 6.00 | 6.00 | 6.00 | |
| **IDA** | 7.50 | 8.00 | 10.00 | 7.50 | 8.00 |
| **G1122** | 13.50 | 15.00 | 8.00 | 13.50 | 13.00 |
| **TBCH** | 8.00 | 8.00 | 10.00 | 8.00 | 4.00 |
| **OLIGO** | 2.00 | 2.00 | 1.50 | 2.00 | 6.00 |
| **T410** | 0.30 | 0.30 | 0.30 | 0.30 | 0.60 |
| **INHIB** | 0.74 | 0.90 | 0.83 | 0.86 | 0.04 |
| **UV10** | 0.35 | 0.35 | 0.35 | 0.35 | |
| **TPL** | 7.00 | 7.00 | 7.00 | 7.00 | 7.00 |
| **ITX** | 1.00 | 0.50 | 0.50 | 1.00 | |

Preparation of Barrier Layer and Topcoat Layer Compositions

The barrier layer compositions S-1, S-2 and S-3 were prepared by mixing the components according to Table 9.

**Table 9**

| wt% of component: | S-1 | S-2 | S-3 |
|---|---|---|---|
| **PVA1** | 2.00 | | |
| **SELVOL** | | 2.00 | |

(continued)

| wt% of component: | S-1 | S-2 | S-3 |
|---|---|---|---|
| ETTMP | | | 10.00 |
| SURF | 0.50 | 0.50 | 0.50 |
| Biocide | 0.40 | 0.40 | 0.40 |
| Water | 97.10 | 97.10 | 89.10 |

Three thiol polymer emulsions E-1, E-2 and E-3 were prepared by mixing the components according to Table 10. Pot A and Pot B were prepared in separate vessels. Pot B was added to Pot A under high shear, using a T25 digital Ultra-Turrax with an 18N rotor available from IKA at 1600 rpm for 3 to 5 minutes. During this operation, Pot A was placed into an ice bath.

**Table 10**

| wt% of component: | E-1 | E-2 | E-3 | Pot |
|---|---|---|---|---|
| X12 | 10.00 | 20.00 | | B |
| KR518 | | | 20.00 | B |
| PVA2-sol | 10.00 | 20.00 | 20.00 | B |
| SURF | 0.50 | 0.50 | 0.50 | B |
| Biocide | 0.40 | 0.40 | 0.40 | B |
| Water | 79.10 | 59.10 | 59.10 | A |

A topcoat layer composition TC-1 was prepared by mixing first the binders Roda® Fix SFD and Roda® Car Dull 92/N into water before adding the silicone Roda® Feel S 5796 and the crosslinker Roda® Link C 70. The resulting composition is shown by Table 11.

**Table 11**

| wt% of component: | TC-1 |
|---|---|
| water | 66.00 |
| Roda® Fix SFD | 20.00 |
| Roda® Car Dull 92/N | 10.00 |
| Roda® Feel S 5796 | 1.00 |
| Roda® Link C 70 | 3.00 |

The barrier layer compositions TC-2 and TC-3 were prepared by mixing the topcoat layer composition TC-1 of Example 1 with the thiol polymer emulsions E-2 and E-3 according to Table 12.

**Table 12**

| wt% of component: | TC-2 | TC-3 |
|---|---|---|
| E-2 | 50.0 | |
| E-3 | | 50.0 |
| TC-1 | 50.0 | 50.0 |

Preparation of Inkjet Printed Leather

A red leather RL and a white leather WL were inkjet printed with the Ink-W and then inkjet printed with Ink-composite-K (homogeneous mixture of Ink-C, Ink-M, Ink-Y, and Ink-K) in High Quality mode at 100% ink coverage in 1016x1200 dpi resolution using an Alussa® eTU 25 LED from AGFA. The samples were cured with 6 passes at 80% UV lamp power.

The following samples were made with the barrier layers S-1, S-2, S-3 and E-1 and the topcoat layer compositions TC-1, TC-2, and TC-3 according to Table 13.

**Table 13**

| Layer build-up | COMP-1 | COMP-2 | INV-1 | INV-2 | INV-3 | INV-4 |
|---|---|---|---|---|---|---|
| **Topcoat** | TC-1 | TC-1 | TC-1 | TC-1 | TC-2 | TC-3 |
| | TC-1 | TC-1 | TC-1 | TC-1 | TC-2 | TC-3 |
| | S-1 | S-2 | S-3 | E-1 | - | - |
| **Ink layer** | Ink-composite-K | Ink-composite-K | Ink-composite-K | Ink-composite-K | Ink-composite-K | Ink-composite-K |
| | Ink-W | Ink-W | Ink-W | Ink-W | Ink-W | Ink-W |
| **Leather** | WL | RL | WL | RL | WL | WL |

Each of the barrier layers S-1, S-2, S-3, and E-1 were sprayed onto an inkjet printed leather at a wet thickness of around 1.0 g / A5 using a PRO-TEK 2600 Spray Gun having a nozzle diameter of 1.4 mm with a pressure of around 4 bar. The coated leathers were dried in an oven for a period of 20 min at an average temperature of 85°C. Thereafter, two topcoat layers of the composition TC-1 were applied on the barrier layers of COMP-1, COMP-2, INV-1, and INV-2 at a wet thickness of around 1.2 g / A5 using a PRO-TEK 2600 Spray Gun having a nozzle diameter of 1.4 mm with a pressure of around 6 bar. The coated leathers were dried in an oven for a period of 5 min at an average temperature of 85°C.

For the samples INV-3 and INV-4, the barrier layers TC-2 and TC-3 were sprayed onto an inkjet printed leather at a wet thickness of around 1.0 g / A5 using a PRO-TEK 2600 Spray Gun having a nozzle diameter of 1.4 mm with a pressure of around 4 bar. The coated leathers were dried in an oven for a period of 20 min at an average temperature of 85°C.

Results and Evaluation

Each of the samples was then tested for migrateables by the above described migration test. The extraction results for the non-reactive components phenoxyethanol and mesitaldehyde (photodecomposition product of TPL) and the reactive components V-MOX, G1122 and PEA are shown in Table 14.

**Table 14**

| Components | Extracted amounts (mg/m$^2$) | | | | | |
|---|---|---|---|---|---|---|
| | COMP-1 | COMP-2 | INV-1 | INV-2 | INV-3 | INV-4 |
| **Phenoxyethanol** | 16.0 | 13.2 | 4.8 | 11.8 | 11.1 | 2.8 |
| **Mesitaldehyde** | 0.5 | 0.2 | 0.1 | 0.1 | 0.3 | 0.0 |
| **V-MOX** | 32.8 | 50.1 | 18.4 | 33.9 | 27.4 | 17.6 |
| **G1122** | 8.3 | 9.2 | 3.2 | 7.0 | 7.4 | 2.3 |
| **PEA** | 7.3 | 6.2 | 2.4 | 4.1 | 5.9 | 1.4 |
| **Total of 5 components** | **64.9** | **79.0** | **28.9** | **57.0** | **52.0** | **24.1** |

The results in Table 14 clearly show that the inclusion of a thiol polymer not only reduces the amount of reactive monomers (V-MOX, G1122 and PEA), but also the amount of non-reactive components such as phenoxyethanol and mesitaldehyde, the latter often responsible for bad odour.

## Claims

1. A decorated natural leather having a decorative image inkjet printed with radiation curable inkjet inks on a crusted leather having a pigmented basecoat on the grain side of the crusted leather, wherein the decorative image is covered by a topcoat and wherein a barrier layer containing a thiol polymer having a molecular weight of at least 500 g/mol is present on the basecoat and/or in the topcoat.

2. The decorated natural leather as claimed in claim 1, wherein the thiol polymer has a thiol content of at least 100 g/mol.

3. The decorated natural leather as claimed in claim 1 or 2, wherein the barrier layer containing the thiol polymer is present on the basecoat and in the topcoat

4. The decorated natural leather as claimed in any one of claims 1 to 3, wherein thiol polymer is selected from the group consisting of an ethoxylated trimethylolpropane tri(3-mercaptopropionate), a polycaprolactone tetra(3-mercaptopropionate), an alkoxysilane involving (3-isocyanatopropyl)trimethoxy-reaction products with pentaerythritol tetrakis(3-mercaptopropionate) and an alkoxysilane having a siloxane chain substituted by mercapto groups.

5. The decorated natural leather as claimed in any one of claims 1 to 4, wherein at least one of the radiation curable inkjet inks contains vinyl methyl oxazolidinone.

6. The decorated natural leather as claimed in any one of claims 1 to 5, wherein at least one of the radiation curable inkjet inks contains an acylphosphineoxide photoinitiator.

7. A method of manufacturing decorated natural leather comprising the steps of applying, in order, on a pigmented basecoat present on the grain side of a crusted leather:

   a) optionally a barrier layer containing a thiol polymer having a molecular weight of at least 500 g/mol;
   b) an ink layer by inkjet printing radiation curable inkjet inks; and
   c)a topcoat including a topcoat layer and/or optionally a barrier layer containing a thiol polymer having a molecular weight of at least 500 g/mol;

   with the proviso that at least one of the barrier layers in step a) and c) is applied.

8. The method of manufacturing decorated natural leather as claimed in claim 7, wherein one or more topcoat layers are present in the topcoat

9. The method of manufacturing decorated natural leather as claimed in claim 7 or 8, wherein the thiol polymer has a thiol content of at least 100 g/mol.

10. The method of manufacturing decorated natural leather as claimed in any one of claims 7 to 9, wherein the barrier layer containing the thiol polymer is present on the basecoat and in the topcoat

11. The method of manufacturing decorated natural leather as claimed in any one of claims 7 to 10, wherein the thiol polymer is selected from the group consisting of an ethoxylated trimethylolpropane tri(3-mercaptopropionate), a polycaprolactone tetra(3-mercaptopropionate), an alkoxysilane involving (3-isocyanatopropyl)trimethoxy-reaction products with pentaerythritol tetrakis(3-mercaptopropionate) and an alkoxysilane having a siloxane chain substituted by mercapto groups.

12. The method of manufacturing decorated natural leather as claimed in any one of claims 7 to 11, wherein at least one of the radiation curable inkjet inks contains vinyl methyl oxazolidinone and/or an acylphosphineoxide photoinitiator.

13. The method of manufacturing decorated natural leather as claimed in any one of claims 7 to 12, wherein at least one of the radiation curable inkjet inks contains an acylphosphineoxide photoinitiator.

14. Use of an aqueous composition containing 2 to 25 wt% of a thiol polymer having a molecular weight of at least 500 g/mol for reducing the extractability of components from a decorated natural leather printed with radiation curable ink.

15. The use according to claim 14, wherein the components are selected from the group consisting of phenoxyethanol, mesitaldehyde, acrylate monomers and vinyl methyl oxazolidinone.

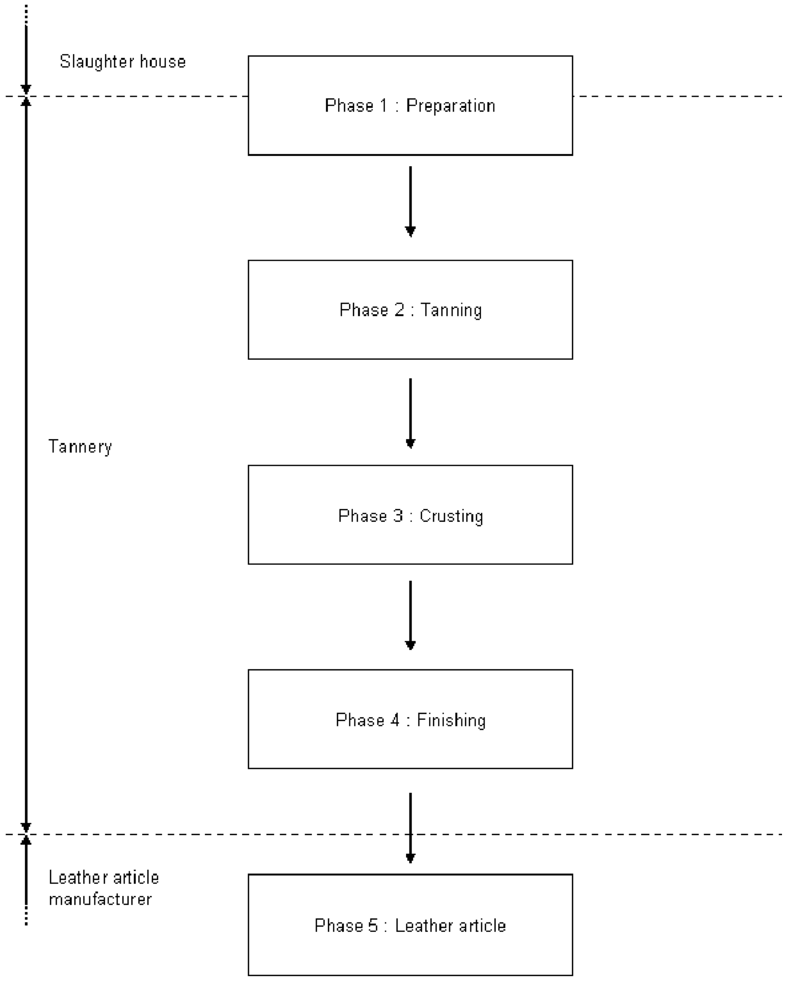
Slaughter house
Phase 1 : Preparation
Phase 2 : Tanning
Tannery
Phase 3 : Crusting
Phase 4 : Finishing
Leather article
manufacturer
Phase 5 : Leather article

Fig. 1

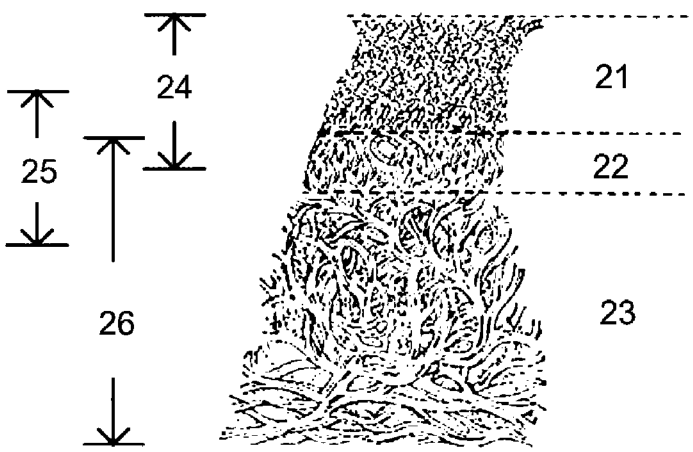
24
21
25
22
26
23

Fig. 2

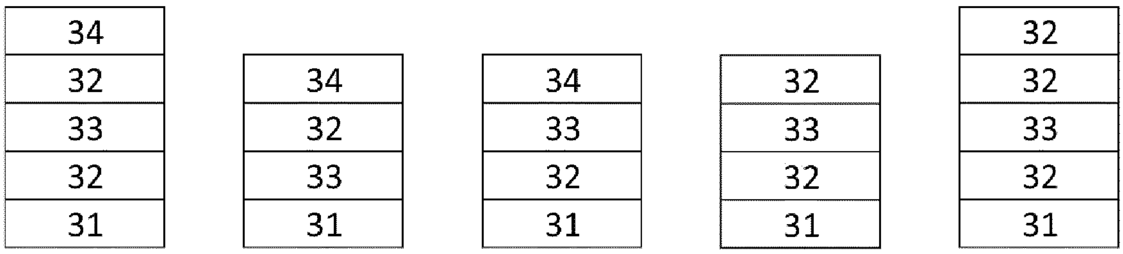


Fig.3A Fig.3B Fig.3C Fig.3D Fig.3E

Fig.3

Europäisches Patentamt
European Patent Office
Office européen des brevets

# EUROPEAN SEARCH REPORT

Application Number
EP 23 15 4089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 388 490 A1 (AGFA NV [BE]) 17 October 2018 (2018-10-17) * claims; examples * ----- | 1-15 | INV. C09D11/101 C09D11/38 C09D11/322 C14C11/00 |
| A | EP 3 572 234 A1 (AGFA NV [BE]) 27 November 2019 (2019-11-27) * claims; examples * ----- | 1-15 | |
| A | EP 3 388 491 A1 (AGFA NV [BE]) 17 October 2018 (2018-10-17) * claims; examples * ----- | 1-15 | |
| A | EP 3 608 372 A1 (AGFA NV [BE]) 12 February 2020 (2020-02-12) * claims; examples * ----- | 1-15 | |
| A | EP 3 572 235 A1 (AGFA NV [BE]) 27 November 2019 (2019-11-27) * claims; examples * ----- | 1-15 | |

TECHNICAL FIELDS SEARCHED (IPC)

C09D
C14C

The present search report has been drawn up for all claims

1

| Place of search | Date of completion of the search | Examiner |
|---|---|---|
| Munich | 10 July 2023 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 15 4089

This annex lists the patent family members relating to the patent documents cited in the above-mentioned European search report. The members are as contained in the European Patent Office EDP file on
The European Patent Office is in no way liable for these particulars which are merely given for the purpose of information.

10-07-2023

| Patent document cited in search report | Publication date | Patent family member(s) | Publication date |
|---|---|---|---|
| EP 3388490 A1 | 17-10-2018 | BR 112019021459 A2 | 12-05-2020 |
| | | CN 110494509 A | 22-11-2019 |
| | | EP 3388490 A1 | 17-10-2018 |
| | | ES 2881506 T3 | 29-11-2021 |
| | | JP 2020516738 A | 11-06-2020 |
| | | KR 20190125462 A | 06-11-2019 |
| | | RU 2730572 C1 | 24-08-2020 |
| | | US 2021187991 A1 | 24-06-2021 |
| | | WO 2018189044 A1 | 18-10-2018 |
| EP 3572234 A1 | 27-11-2019 | CN 112118963 A | 22-12-2020 |
| | | EP 3572234 A1 | 27-11-2019 |
| | | US 2021213768 A1 | 15-07-2021 |
| | | WO 2019224097 A1 | 28-11-2019 |
| EP 3388491 A1 | 17-10-2018 | BR 112019021470 A2 | 12-05-2020 |
| | | CN 110494511 A | 22-11-2019 |
| | | DK 3388491 T3 | 21-09-2020 |
| | | EP 3388491 A1 | 17-10-2018 |
| | | EP 3702422 A1 | 02-09-2020 |
| | | ES 2810124 T3 | 08-03-2021 |
| | | JP 6902621 B2 | 14-07-2021 |
| | | JP 2020516735 A | 11-06-2020 |
| | | KR 20190122853 A | 30-10-2019 |
| | | PL 3388491 T3 | 14-12-2020 |
| | | PT 3388491 T | 13-07-2020 |
| | | RU 2745321 C1 | 23-03-2021 |
| | | RU 2020142950 A | 15-01-2021 |
| | | US 2020101783 A1 | 02-04-2020 |
| | | WO 2018189002 A1 | 18-10-2018 |
| EP 3608372 A1 | 12-02-2020 | BR 112021002368 A2 | 04-05-2021 |
| | | BR 112021002396 A2 | 04-05-2021 |
| | | CN 112534004 A | 19-03-2021 |
| | | CN 112534005 A | 19-03-2021 |
| | | EP 3608372 A1 | 12-02-2020 |
| | | EP 3833720 A1 | 16-06-2021 |
| | | US 2021221156 A1 | 22-07-2021 |
| | | US 2021260905 A1 | 26-08-2021 |
| | | WO 2020030668 A1 | 13-02-2020 |
| | | WO 2020030699 A1 | 13-02-2020 |
| EP 3572235 A1 | 27-11-2019 | CN 112154071 A | 29-12-2020 |
| | | EP 3572235 A1 | 27-11-2019 |
| | | US 2021122177 A1 | 29-04-2021 |
| | | WO 2019224100 A1 | 28-11-2019 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 23 15 4089

This annex lists the patent family members relating to the patent documents cited in the above-mentioned European search report. The members are as contained in the European Patent Office EDP file on
The European Patent Office is in no way liable for these particulars which are merely given for the purpose of information.

10-07-2023

| Patent document cited in search report | Publication date | Patent family member(s) | Publication date |
|---|---|---|---|

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013135828 A
- EP 3833720 A
- EP 2053101 A
- EP 2326674 A
- EP 1790698 A
- EP 1790696 A
- WO 2007060255 A
- EP 1790695 A
- EP 1790697 A
- WO 2019243039 A
- WO 2014051026 A
- WO 2014129213 A
- US 4922004 A
- EP 2509948 A
- EP 2161264 A
- EP 2199273 A
- EP 2684876 A
- EP 1616920 A
- EP 1616899 A
- WO 2007060254 A


### Non-patent literature cited in the description


- **HERBST, WILLY et al.** Industrial Organic Pigments, Production, Properties, Applications. Wiley - VCH, 2004
- Resolution AP(89) 1. Council of Europe, 13 September 1989
- Polymer Handbook. Wiley-Interscience, 1999, vol. 1,2
- **CRIVELLO, J.V. et al.** Photoinitiators for Free Radical Cationic. John Wiley and Sons Ltd, 1998, vol. III, 287-294
- *CHEMICAL ABSTRACTS,* 345352-19-4
- *CHEMICAL ABSTRACTS,* 1639946-87-4
- *CHEMICAL ABSTRACTS,* 3395-98-0
- *CHEMICAL ABSTRACTS,* 127553-58-6